# EUROPÄISCHE PATENTANMELDUNG

(11) **EP 3 301 808 A1**
(43) Veröffentlichungstag der Anmeldung: **04.04.2018**
(21) Anmeldenummer: 17188266.5
(22) Anmeldetag: 29.08.2017
(51) Int. Cl.: H02P 25/022

(54) **ZWEISTRÄNGIGER EINPHASEN-SYNCHRONANTRIEB**

(30) Priorität: 29.09.2016 DE 102016118501
(71) Anmelder: Miele & Cie. KG, 33332 Gütersloh (DE)
(72) Erfinder: Werner, Timo, 50764 Köln (DE); Rech, Thomas, 51105 Köln (DE)

(57) **Zusammenfassung**

Die Erfindung betrifft einen zweisträngigen Einphasen-Synchronantrieb (1) mit einem zweisträngigen Einphasen-Synchronmotor (2) mit einem ersten Wicklungsstrang (21) und mit einem zweiten Wicklungsstrang (22) und mit einer Steuerungselektronik (3) mit einem ersten Schalter (31) zum Schalten des ersten Wicklungsstranges (21) und mit einem zweiten Schalter (32) zum Schalten des zweiten Wicklungsstranges (22), wobei die Steuerungselektronik (3) ausgebildet ist, die beiden Schalter (31, 32) derart zeitlich bzw. im Phasenwinkel (φ) einer Wechselspannung (U) versetzt zueinander zu schalten, dass immer nur ein Wicklungsstrang (21, 22) gleichzeitig bestromt wird.

## Beschreibung

Die vorliegende Erfindung betrifft einen zweisträngigen Einphasen-Synchronantrieb gemäß dem Oberbegriff des Anspruchs 1, einen zweisträngigen Einphasen-Synchronmotor gemäß des Anspruchs 12 zur Verwendung in einem derartigen zweisträngigen Einphasen-Synchronantrieb, eine Steuerungselektronik gemäß des Anspruchs 13 zur Verwendung in einem derartigen zweisträngigen Einphasen-Synchronantrieb sowie ein elektrisches Gerät gemäß des Anspruchs 14 mit einem derartigen zweisträngigen Einphasen-Synchronantrieb.

Zu der bekannten elektrischen Motoren gehören die mehrsträngigen Permanentmagnet-Synchronmotoren. Um diese betreiben zu können, ist üblicherweise ein Frequenzumrichter erforderlich. Über den Frequenzumrichter können derartige Synchronmotoren geregelt betrieben werden, d.h. Drehrichtung, Drehzahl und Drehmoment des Synchronmotors lassen sich über die Frequenz und Amplitude der Ausgangswechselspannung des Frequenzumrichters vorgeben. Hierdurch kann das Drehverhalten des Synchronmotors z.B. beim Anlauf sowie in Abhängigkeit der anzutreibenden Last gezielt beeinflusst werden.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen, wie z.B. einfachen Pumpen, wie z.B. Laugenpumpen in Waschmaschinen, höchst unerwünscht, weil die durch den Frequenzumrichter geschaffenen Möglichkeiten der Regelung bzw. Steuerung des Synchronmotors für diese Anwendungen gar nicht benötigt werden und sich somit die Mehrkosten des Frequenzumrichters nicht rentieren. Zu derartigen einfachen Anwendungen bei z.B. Laugenpumpen in Waschmaschinen gehören das Abpumpen der Lauge aus dem Waschraum oder das Umfluten bzw. Umpumpen. In beiden Fällen ist ein geregelter Betrieb der Laugenpumpe nicht erforderlich.

Als kostengünstige Alternative zu mittels Frequenzumrichtern betriebener Synchronmotoren ist es bei einfachen Anwendungen, wie z.B. bei Laugenpumpen in Waschmaschinen, bekannt, einsträngige Einphasen-Synchronmotoren als Antriebe der Laugenpumpe einzusetzen. Hierbei werden üblicherweise permanenterregte einsträngige Einphasen-Synchronmotoren eingesetzt, so dass auf einen elektrischen Kontakt von Stator (Ständer) zum Rotor (Läufer) mittels Schleifringen oder Bürsten verzichtet werden kann.

Vorteilhaft ist bei Synchronmotoren allgemein, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines Synchronmotors mit der Frequenz der Wechselspannung sehr einfach möglich und es kann auf kostenintensive Steuerungen sowie Frequenzumrichter verzichtet werden. Dies kommt insbesondere einfachen Anwendungen mit konstanter Drehzahl wie z.B. bei Laugenpumpen in Waschmaschinen zugute.

Nachteilig ist bei Synchronmotoren jedoch, dass beim Einschalten das Statordrehfeld sofort mit der Synchrondrehzahl rotiert, der Rotor jedoch noch stillsteht, weil er aufgrund seines Trägheitsmoments etwas Zeit zur Beschleunigung benötigt. Daher erfordern Synchronmotoren eine Anfahrhilfe. Dies bedeutet jedoch einen zusätzlichen Aufwand.

Um diesen Aufwand und die damit verbundenen Kosten sowie ggfs. erforderlichen Bauraum zu vermeiden, ist es bekannt, bei einfachen Anwendungen Einphasen-Synchronmotoren einzusetzen. Diese benötigen zwar ebenfalls eine Anfahrhilfe, um in die gewünschte Drehrichtung zu starten. Allerdings sind Einphasen-Synchronmotoren in der Lage, durch Schwingbewegungen oft von selbst in einer undefinierten Richtung anzulaufen. Somit kann zwar die Drehrichtung nicht vorgegeben werden, jedoch kommt ohne zusätzlichen Aufwand für eine Anfahrhilfe eine Drehbewegung in eine der beiden Richtungen mit einer zur Frequenz der Wechselspannung proportionalen Drehzahl zustande. Dies kann für viele einfache Anwendungen, wie z.B. für kleine Wasserpumpen, wie z.B. für Laugenpumpen von Waschmaschinen oder für Aquariumpumpen ausreichend sein, um den Zweck der Pumpe zu erfüllen.

Nachteilig ist bei der Verwendung von Einphasen-Synchronmotoren dennoch, dass die Drehrichtung eben nicht definiert vorgegeben werden kann. Ferner können die anfänglichen Schwingbewegungen des Rotors beim Starten aus dem Stillstand zu Geräuschen führen, die für den Benutzer unerwünscht sein können. Ferner können weder ein Blockieren des Rotors noch Lastzustände erkannt werden.

Nachteilig ist bei Einphasen-Synchronmotoren weiterhin, dass üblicherweise Kondensatoren erforderlich sind, um eine Phasenverschiebung der einen Phase der Netzspannung in die mehreren Phasen der einzelnen Wicklungsstränge zu erreichen. Beispielsweise erfolgt bei einem zweisträngigen Einphasen-Synchronmotor eine definierte Phasenverschiebung der Wechselspannungen der beiden Stränge durch einen Kondensator. Dieser Kondensator kann jedoch ein großvolumiges Bauelement darstellen, welches die Baugröße des Antriebs signifikant vergrößern kann. Ferner kann der Kondensator zusätzliche Kosten verursachen. Auch kann der Kondensator zu einer zusätzlichen Temperaturentwicklung des Antriebs führen und damit dessen Temperaturfestigkeit reduzieren. Des Weiteren kann der Kondensator eher ausfallen als andere elektronische Bauteile des Antriebs, so dass der Kondensator die Zuverlässigkeit des Antriebs negativ beeinflussen kann.

Alternativ ist es daher für einfache Anwendungen bekannt, Spaltpolmotoren zu verwenden, welche ebenfalls mit einphasigem Wechselstrom betrieben werden können, jedoch eine definierte Drehrichtung aufweisen. Ferner können Spaltpolmotoren mechanisch sehr einfach aufgebaut sein. Dies alles kann die Kosten für Spaltmotoren gering halten, so dass sie sich für einfache Anwendungen sehr kostengünstig einsetzen lassen.

Nachteilig ist bei Spaltpolmotoren jedoch, dass die definierte Drehrichtung durch die Polanordnung vorgegeben ist und sich somit nicht elektrisch ändern lässt. Nachteilig ist weiterhin, dass Spaltpolmotoren einen vergleichsweise schlechten Wirkungsgrad von ca. 20 % aufweisen, was zu einem vergleichsweise hohen Energieverbrauch führen kann. Ferner kann es durch die entsprechenden Stromwärmeverluste zu einer unerwünscht hohen Erwärmung des elektrischen Motors und damit der gesamten z.B. Pumpe kommen, was für viele Anwendungen nicht gewollt sein kann.

Der Erfindung stellt sich somit das Problem, einen zweisträngigen Einphasen-Synchronmotor der eingangsbeschriebenen Art bereitzustellen, welcher geregelt und dennoch direkt am Netz betrieben werden kann. Insbesondere soll ein derartiger zwei-strängiger Einphasen-Synchronmotor einfach betrieben und bzw. oder einfach aus dem Stillstand gestartet werden können. Insbesondere soll ein derartiger zweisträngiger Einphasen-Synchronmotor in beiden Drehrichtungen und bzw. oder mit unterschiedlichen Drehzahlen bzw. bei unterschiedlichen Lasten betrieben werden können.

Erfindungsgemäß wird dieses Problem durch einen zweisträngigen Einphasen-Synchronantrieb mit den Merkmalen des Patentanspruchs 1, durch einen zweisträngigen Einphasen-Synchronmotor mit den Merkmalen des Patentanspruchs 12, durch eine Steuerungselektronik mit den Merkmalen des Patentanspruchs 13 sowie durch ein elektrisches Gerät mit den Merkmalen des Patentanspruchs 14 gelöst. Vorteilhafte Ausgestaltungen und Weiterbildungen der Erfindung ergeben sich aus den nachfolgenden Unteransprüchen.

Die vorliegende Erfindung betrifft somit einen zweisträngigen Einphasen-Synchronantrieb mit einem zweisträngigen Einphasen-Synchronmotor mit einem ersten Wicklungsstrang und mit einem zweiten Wicklungsstrang und mit einer Steuerungselektronik mit einem ersten Schalter zum Schalten des ersten Wicklungsstranges und mit einem zweiten Schalter zum Schalten des zweiten Wicklungsstranges, wobei die Steuerungselektronik ausgebildet ist, die beiden Schalter derart zeitlich bzw. im Phasenwinkel einer Wechselspannung versetzt zueinander zu schalten, dass immer nur ein Wicklungsstrang gleichzeitig bestromt wird. Unter einem Antrieb wird die Kombination aus einem Motor mit einer Steuerungselektronik oder anderen Steuerungselementen wie z.B. einem Frequenzumrichter etc. verstanden.

Mit anderen Worten wird erfindungsgemäß die Wechselspannung, welche vorzugsweise direkt die Netzspannung ist, abwechselnd auf den ersten Wicklungsstrang und auf den zweiten Wicklungsstrang gegeben. Hierdurch werden abwechselnd durch die Wechselspannung Ströme in den beiden Wicklungssträngen induziert, welche zueinander zeitlich versetzt sind. Auf diese Weise kann ein zweisträngiger Einphasen-Synchronmotor betrieben werden, ohne dass hierzu ein Kondensator verwendet werden muss, um den zeitlichen Versatz bzw. die Phasenverschiebung der Bestromung der beiden Wicklungsstränge zu bewirken. Ferner kann hierdurch der Betrieb des zweisträngigen Einphasen-Synchronantriebs direkt an der Netzspannung erfolgen.

Somit kommt der erfindungsgemäße zweisträngige Einphasen-Synchronmotor ohne Strangkapazität bzw. Strangkondensator und optionales Steuerrelais für eine Drehrichtungsbeeinflussung aus, so dass die entsprechenden Kosten und der Bauraum eingespart werden können. Ferner kann die elektrische Drehzahl des zweisträngigen Einphasen-Synchronantriebs durch die Ansteuerung zusätzlich halbiert werden.

Gemäß einem Aspekt der vorliegenden Erfindung ist die Steuerungselektronik ausgebildet, die beiden Schalter mit einer Phasenverschiebung von 90° verzögert zu schalten. Somit kann im Nennbetrieb die Spannung im Nulldurchgang auf den ersten Wicklungsstrang aufgeschaltet und nach einer Zeitdauer von 5 ms bzw. nach einem Phasenwinkel von 90° gelöscht werden. Der zweite Wicklungsstrang kann nun nach 5 ms bzw. nach 90° geschaltet und im nächsten Nulldurchgang gelöscht werden. Dies kann zu einem periodischen Zyklus führen, bei dem eine Phasenverschiebung der jeweiligen Spannungen und Ströme von 90° existiert. Hierdurch kann die gleichmäßig abwechselnde Bestromung beider Wicklungsstränge erreicht werden, um ein Drehfeld zu erzeugen, welches den zweisträngigen Einphasenmotor-Synchronmotor betreiben kann.

Gemäß einem weiteren Aspekt der vorliegenden Erfindung ist die Steuerungselektronik ausgebildet, die beiden Schalter derart zu schalten, dass die zeitliche Dauer eines leitenden Zustands des jeweiligen Schalters geringer als 5 ms bei einer Wechselspannung von 50 Hz bzw. geringer als ein Phasenwinkel von 90° ist. Auf diese Weise kann der zweisträngige Einphasen-Synchronmotor lastabhängig betrieben werden, indem nicht die maximale Dauer der Bestromung eines Wicklungsstranges von 5 ms bzw. 90° ausgeschöpft wird, sondern die Bestromung auch geringer gehalten und variiert werden kann. Auch können hierdurch verschiedene Bestromungen für den Anlauf und für den Betrieb eingestellt werden, so dass für den Anlauf keine zusätzlichen Maßnahmen erforderlich sind.

Gemäß einem weiteren Aspekt der vorliegenden Erfindung weisen beide Wicklungsstränge die gleiche Windungszahl auf. Auf diese Weise kann der zweisträngige Einphasen-Synchronmotor in beide Drehrichtungen identisch und gleichwertig betrieben werden.

Gemäß einem weiteren Aspekt der vorliegenden Erfindung sind der erste Schalter und der zweite Schalter mit dem jeweiligen Wicklungsstrang derart elektrisch leitfähig verbunden, so dass über dem ersten Schalter bzw. über dem zweiten Schalter eine Wechselspannung anliegen kann, wobei der erste Schalter und der zweite Schalter jeweils ausgebildet sind, die Schaltfunktion mittels eines Gleichspannungsschalters auszuführen. Auf diese Weise kann die Schaltfunktion mittels Schaltungsmechanismen durchgeführt werden, welche auf Gleichspannungstechnik beruhen. Dies kann die Nutzung von anderen und insbesondere vorteilhaften Schaltfunktionen ermöglichen, welche bei auf Wechselspannung beruhenden Schaltfunktionen nicht zur Verfügung stehen.

Gemäß einem weiteren Aspekt der vorliegenden Erfindung weist der Gleichspannungsschalter einen Gleichspannungs-Halbleiterschalter, vorzugsweise einen MOSFET oder einen IGBT, auf, welcher ausgebildet ist, im leitenden Zustand einen Gleichstrom zu leiten und im nicht-leitenden Zustand einen Gleichstrom zu sperren, wobei der Gleichspannungsschalter ferner einen Umschalter aufweist, der ausgebildet ist, den Gleichspannungs-Halbleiterschalter zwischen seinem leitenden Zustand und seinem nicht-leitenden Zustand zu schalten.

Über den Umschalter kann somit die Durchleitung bzw. Sperrung des Gleichstroms mittels Gleichspannungs-Halbleiterschalter geschaltet werden. Die Betätigung des Umschalters kann z.B. über eine Steuerungseinheit wie z.B. einen Mikrocontroller der Steuerungselektronik erfolgen. Somit kann für jeden Wicklungsstrang über den jeweiligen Schalter die Wechselspannung zu definierten Einschaltpunkten eingeschaltet und ebenso zu definierten Ausschaltpunkten wieder ausgeschaltet werden. Hierdurch lassen sich nicht nur die Zeitpunkte des Stromflusses bestimmen, sondern auch die Menge des induzierten Stromes.

Mit anderen Worten kann sich in Abhängigkeit der zugeführten Spannungs-Zeit-Fläche und der Induktivität ein Strom in dem jeweiligen Wicklungsstrang einstellen, der proportional zum Drehmoment ist. Um die Ströme und damit das Drehmoment der beiden Wicklungsstränge gleich zu halten, müssen gleiche Spannungszeitflächen übertragen werden. Hierzu kann das Einschalten des jeweiligen Wicklungsstrangs gegenüber dem Nulldurchgang verzögert und bzw. oder das Abschalten gegenüber dem nächsten Nulldurchgang vorgezogen werden, so dass sich der Effektivstrom und damit das Drehmoment reduzieren lassen. Auf diese Weise sind mehrere Lastpunkte denkbar.

Den Gleichspannungs-Halbleiterschalter durch einen MOSFET (Metall-Oxid-Halbleiter-Feldeffekttransistor; englisch: metal-oxide-semiconductor field-effect transistor) oder einen IGBT (Bipolartransistor mit isolierter Gate-Elektrode; englisch: insulated-gate bipolar transistor) zu realisieren ist vorteilhaft, weil diese Schaltungen einfach und kostengünstig sind.

Gemäß einem weiteren Aspekt der vorliegenden Erfindung weisen der erste Schalter und der zweite Schalter jeweils eine Gleichrichterschaltung auf, welche ausgebildet ist, eine über der Gleichrichterschaltung anliegende Wechselspannung gleichzurichten, wobei der Gleichspannungsschalter innerhalb der Gleichrichterschaltung angeordnet ist. Auf diese Weise kann die Wandlung zwischen Wechselspannung und Gleichspannung erfolgen, um die außen an dem jeweiligen Schalter anliegende Wechselspannung innerhalb des Schalters als Gleichspannung nutzen zu können.

Gemäß einem weiteren Aspekt der vorliegenden Erfindung weist die Gleichrichterschaltung ein erstes Paar von Dioden auf, welche parallel zueinander angeordnet sind, und weist die Gleichrichterschaltung ein zweites Paar von Dioden auf, welche parallel zueinander angeordnet sind, wobei der Gleichspannungsschalter parallel zu dem ersten Paar von Dioden und zu dem zweiten Paar von Dioden angeordnet ist. Auf diese Weise kann eine Speisung des jeweiligen Gleichspannungsschalters mit Gleichspannung durch die beiden DiodenPaare der Gleichrichterschaltung erreicht werden.

Gemäß einem weiteren Aspekt der vorliegenden Erfindung weisen der erste Schalter und der zweite Schalter jeweils einen Kondensator auf, der parallel zum Gleichspannungsschalter angeordnet ist. Hierdurch kann eine Entlastung des Gleichspannungsschalters geschaffen werden, die die Strom- und Spannungsverhältnisse während des Schaltvorgangs des Gleichspannungsschalters erheblich verbessern und somit die Schaltverlustleistung reduzieren kann. Der Kondensator kann den Laststrom des Abschaltens des Gleichspannungsschalters übernehmen, wodurch der Gleichspannungsschalter stromlos und somit verlustleistungslos abgeschaltet werden kann.

Gemäß einem weiteren Aspekt der vorliegenden Erfindung weist die Steuerungselektronik ferner eine Nulldurchgangserkennungseinheit auf, welche ausgebildet ist, einen Nulldurchgang des Phasenwinkels der Wechselspannung zu erkennen. Auf diese Weise kann der Steuerungselektronik die Information über die Nulldurchgänge zur Verfügung gestellt werden, um die beiden Schalter entsprechend der Nulldurchgänge bzw. relativ zu den Nulldurchgängen schalten zu können.

Gemäß einem weiteren Aspekt der vorliegenden Erfindung weist der zweisträngige Einphasen-Synchronantrieb ferner einen Netzspannungsanschluss zum Abgriff einer Netzspannung auf. Auf diese Weise kann der zweisträngige Einphasen-Synchronantrieb direkt an einem Versorgungsnetz betrieben werden. Die Netzspannung kann von einer elektrischen Energiequelle, wie z.B. über eine Steckdose oder durch einen Akkumulator oder dergleichen, als Versorgungsnetz bereitgestellt werden.

Die vorliegende Erfindung betrifft auch einen zweisträngiger Einphasen-Synchronmotor zur Verwendung bei einem zwei-strängigen Einphasen-Synchronantrieb wie zuvor beschrieben mit einem ersten Wicklungsstrang und einem zweiten Wicklungsstrang, wobei beide Wicklungsstränge die gleiche Windungszahl aufweisen.

Die Eigenschaften und Vorteile dieser Merkmale wurden bereits zuvor hinsichtlich des entsprechenden zweisträngigen Einphasen-Synchronantriebs beschrieben und sollen hier nicht wiederholt werden. Mittels eines derartigen zweisträngigen Einphasen-Synchronmotors kann ein zuvor beschriebener zweisträngiger Einphasen-Synchronantrieb umgesetzt werden.

Vorteilhaft ist hierbei auch, dass ein und derselbe zweisträngige Einphasen-Synchronmotor mit verschiedenen Steuerungselektroniken kombiniert werden kann, um verschiedene erfindungsgemäße zweisträngige Einphasen-Synchronantriebe bereitzustellen. Hierdurch kann der zweisträngige Einphasen-Synchronantrieb modular aufgebaut und je nach Anwendungsfall konfiguriert werden. Mit anderen Worten kann auf diese Weise eine Plattformstrategie umgesetzt werden.

Die vorliegende Erfindung betrifft auch eine Steuerungselektronik zur Verwendung bei einem zweisträngigen Einphasen-Synchronantrieb wie zuvor beschrieben mit einem ersten Schalter zum Schalten des ersten Wicklungsstranges und mit einem zweiten Schalter zum Schalten des zweiten Wicklungsstranges, wobei die Steuerungselektronik ausgebildet ist, die beiden Schalter derart zeitlich bzw. im Phasenwinkel einer Wechselspannung versetzt zueinander zu schalten, dass immer nur ein Wicklungsstrang gleichzeitig bestromt wird.

Die Eigenschaften und Vorteile dieser Merkmale wurden bereits zuvor hinsichtlich des entsprechenden zweisträngigen Einphasen-Synchronantriebs beschrieben und sollen hier nicht wiederholt werden. Mittels einer derartigen Steuerungselektronik kann ein zuvor beschriebener zweisträngiger Einphasen-Synchronantrieb umgesetzt werden.

Vorteilhaft ist hierbei auch, dass ein und dieselbe Steuerungselektronik mit verschiedenen zweisträngigen Einphasen-Synchronmotoren kombiniert werden kann, um verschiedene erfindungsgemäße zweisträngige Einphasen-Synchronantrieben bereitzustellen. Hierdurch kann der zweisträngige Einphasen-Synchronantrieb modular aufgebaut und je nach Anwendungsfall konfiguriert werden. Mit anderen Worten kann auf diese Weise eine Plattformstrategie umgesetzt werden.

Die vorliegende Erfindung betrifft auch ein elektrisches Gerät, vorzugsweise ein elektrisches Haushaltsgerät, vorzugsweise Waschmaschine, Wäschetrockner, Lüfter, Herd, Gebläse oder Spülmaschine, mit einem zweisträngigen Einphasen-Synchronantrieb wie zuvor beschrieben.

Vorteilhaft ist hierbei, dass bei derartigen Anwendungen ein einfacher und kostengünstiger zweisträngiger Einphasen-Synchronantrieb vollkommen ausreichend sein kann, um die gewünschte Wirkung wie z.B. das Abpumpen der Lauge zu realisieren. Gleichzeitig können die Kosten des elektrischen Gerätes gering gehalten werden, was für viele Benutzer ein wesentliches Kaufkriterium sein kann. Ferner können bei geringen Kosten die zuvor beschrieben Vorteile wie z.B. ein einfaches und leises Anlaufen des zweisträngigen Einphasen-Synchronantriebs bereitgestellt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines erfindungsgemäßen zweisträngigen Einphasen-Synchronantriebs;
- Figur 2: eine schematische Darstellung im Wesentlichen eines ersten Schalters bzw. eines zweiten Schalters einer erfindungsgemäßen Steuerungselektronik des erfindungsgemäßen zweisträngigen Einphasen-Synchronantriebs;
- Figur 3: einen Verlauf der Spannungen für beide Wicklungsstränge des zweisträngigen Einphasen-Synchronmotors; und
- Figur 4: einen Verlauf der Spannungen und hierdurch induzierten Ströme für beide Wicklungsstränge des zweisträngigen Einphasen-Synchronmotors.

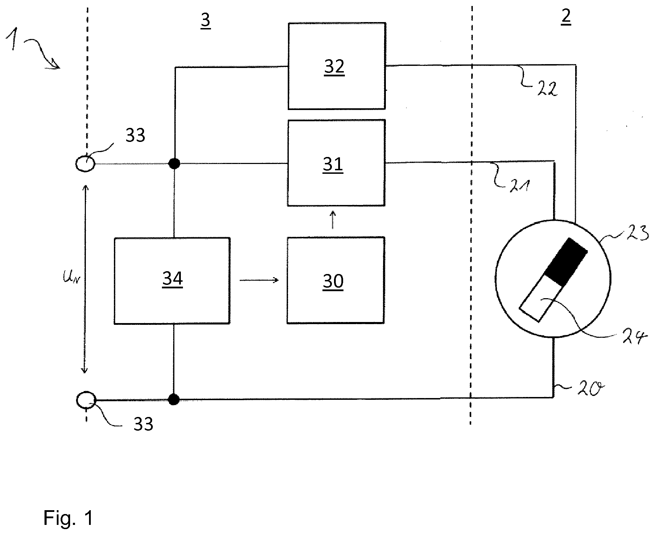

Figur 1 zeigt eine schematische Darstellung eines erfindungsgemäßen zweisträngigen Einphasen-Synchronantriebs 1. Der zweisträngige Einphasen-Synchronantrieb 1 weist einen zweisträngigen Einphasen-Synchronmotor 2 und eine Steuerungselektronik 3 auf. Die Steuerungselektronik 3 weist ein Paar von Kontakten 33 auf, welche den Netzspannungsanschluss 33 des zweisträngigen Einphasen-Synchronantriebs 1 bilden. Über den Netzspannungsanschluss 33 ist der zweisträngige Einphasen-Synchronantrieb 1 mit einem Versorgungsnetz verbunden, welches eine Netzspannung U_{N} bereitstellt.

Der zweisträngige Einphasen-Synchronmotor 2 weist einen Stator 23 und einen Rotor 24 auf. Der Stator 23 weist einen ersten Wicklungsstrang 21 und einen zweiten Wicklungsstrang 22 auf, wobei beide Wicklungsstränge 21, 22 die gleiche Windungsanzahl aufweisen. Die beiden Wicklungsstränge 21, 22 sind auf der einen Seite jeweils mit einem Schalter 31, 32 der Steuerungselektronik 3 elektrisch leitfähig verbunden, siehe weiter unten. Auf der anderen Seite sind die beiden Wicklungsstränge 21, 22 mit einem Bezugspotential 20 der Steuerungselektronik 2 elektrisch leitfähig verbunden.

Die Steuerungselektronik 3 weist eine Steuerungseinheit 30 in Form eines Mikrocontrollers 30 auf. Die Steuerungselektronik 3 weist ferner einen ersten Schalter 31 und einen zweiten Schalter 32 auf. Die beiden Schalter 31, 32 sind auf einer Seite mit einem Kontakt des Netzspannungsanschlusses 33 elektrisch leitfähig verbunden. Auf der anderen Seite sind die beiden Schalter 31, 32 mit den beiden Wicklungssträngen 21, 22 des zweisträngigen Einphasen-Synchronmotors 2 elektrisch leitfähig verbunden. Die beiden Schalter 31, 32 können durch den Mikrocontroller 30 zwischen zwei Schaltungszuständen hin und her geschaltet werden, so dass sie jeweils einen elektrisch leitfähigen Kontakt zwischen dem jeweiligen Wicklungsstrang 31, 32 und dem einen Kontakt des Netzspannungsanschlusses 33 herstellen oder sperren können. Dabei können die beiden Schalter 31, 32 von der Steuerungselektronik 3 phasenverschoben geschaltet werden.

Die Steuerungselektronik 3 weist ferner eine Nulldurchgangserkennungseinheit 34 auf, welche die Netzspannung U_{N} zwischen den beiden Kontakten des Netzspannungsanschlusses 33 erfassen und die Nulldurchgänge der Netzspannung U_{N} erkennen kann. Der Mikrocontroller 30 kann von der Nulldurchgangserkennungseinheit 34 die Informationen über einen erfassten Nulldurchgang der Netzspannung U_{N} zur Verfügung gestellt bekommen.

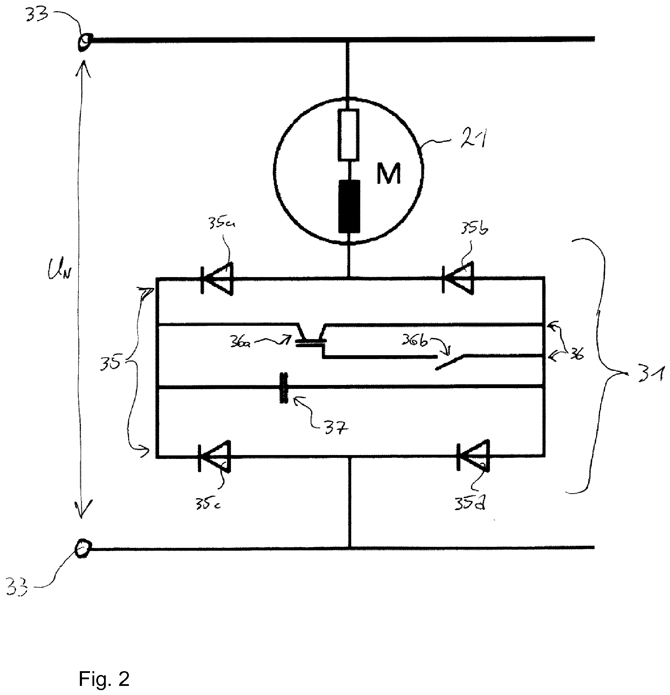

Figur 2 zeigt eine schematische Darstellung im Wesentlichen eines ersten Schalters 31 bzw. eines zweiten Schalters 32 einer erfindungsgemäßen Steuerungselektronik 3 des erfindungsgemäßen zweisträngigen Einphasen-Synchronantriebs 1. Der dargestellte Schalter 31, 32 ist in Reihe mit dem jeweiligen Wicklungsstrang 21, 22 geschaltet, über welche gemeinsam die Netzspannung U_{N} über den Netzspannungsanschluss 33 anliegt.

Jeder Schalter 31, 32 weist eine Gleichspannungsschaltung 35 auf, welche aus einem ersten Paar von Dioden 35a, 35b besteht, welche parallel zueinander angeordnet sind, und aus einem zweiten Paar von Dioden 35c, 35d besteht, welche parallel zueinander angeordnet sind. Zwischen und parallel zu den beiden Paaren von Dioden, 35a, 35b, 35c, 35d ist ein Gleichspannungsschalter 36 angeordnet, so dass dieser mit Gleichspannung betrieben werden kann. Parallel zum Gleichspannungsschalter 36 ist ein Kondensator 37 angeordnet, welcher der Übernahme des Laststroms des Abschaltens des Gleichspannungsschalters 36 dient.

Der Gleichspannungsschalter 36 besteht aus einem Gleichspannungs-Halbleiterschalter 36a in Form eines MOSFET 36a, welcher im leitenden Zustand einen Gleichstrom leiten und im nicht-leitenden Zustand einen Gleichstrom sperren kann. Zum Umschalten zwischen diesen beiden Zuständen des MOSFET 36a ist ein Umschalter 36b vorgesehen, welcher über das Gate des MOSFET 36a dessen Umschaltung zwischen dem leitenden Zustand des MOSFET 36a und dem nicht-leitenden Zustand des MOSFET 36a durchführen kann. Der Umschaltung 36b wiederum kann mittels des Mikrocontrollers 30 geschaltet werden.

Auf diese Weise können die beiden Schalter 31, 32 durch den Mikrocontroller 30 zum einen derart zeitlich versetzt bzw. phasenversetzt geschaltet werden, dass der zweisträngige Einphasen-Synchronmotor 2 betrieben werden kann, ohne dass hierzu ein Kondensator verwendet werden muss, um den zeitlichen Versatz bzw. die Phasenverschiebung Δφ der Bestromung der beiden Wicklungsstränge 21, 22 zu bewirken. Somit kann der zweisträngige Einphasen-Synchronantrieb 1 direkt an der Netzspannung U_{N} und ohne Strangkapazität bzw. Strangkondensator betrieben werden, was die Kosten des erfindungsgemäßen zweisträngigen Einphasen-Synchronantriebs 1 reduziert.

Zum anderen kann eine variable Einstellung der Drehrichtung, der Drehzahl bzw. der Last des zweisträngigen Einphasen-Synchronantriebs 1 erfolgen, da mittels der Schalter 31, 32 sowohl ein Einschalten als auch Ausschalten des jeweiligen Stromes I₁, I₂ der beiden Wicklungsstränge 21, 22 zu beliebigen Zeitpunkten bzw. Phasenwinkeln φ und über beliebige Zeitdauern bzw. Phasenwinkel φ möglich ist. Dies wird durch die vom Nulldurchgang der Netzspannung U_{N} unabhängigen Schaltmöglichkeiten der jeweiligen Gleichspannungsschalter 36 erreicht. Durch die Wahl der Drehrichtungen und deren gleichwertigen Betrieb können z.B. bei einer Pumpe z.B. einer Waschmaschine zwei unterschiedliche Förderwege wie Abpumpen und Umpumpen bedient werden.

Bei der Verwendung von Wechselspannungsschaltern wäre dies in dieser Form möglich, weil z.B. ein Triac-Schalter (Zweirichtungs-Thyristortriode; englisch: Triode for nicht Alternating Current) lediglich eingeschaltet werden kann, das Ausschalten jedoch nicht definiert vorgenommen werden kann, sondern prinzipbedingt durch den nächsten Nulldurchgang der Netzspannung U_{N} erfolgt.

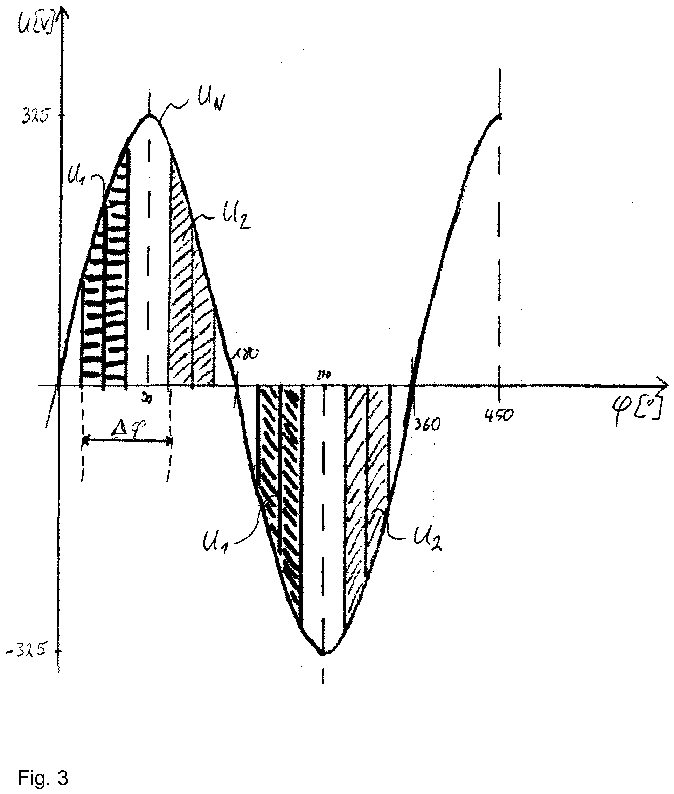

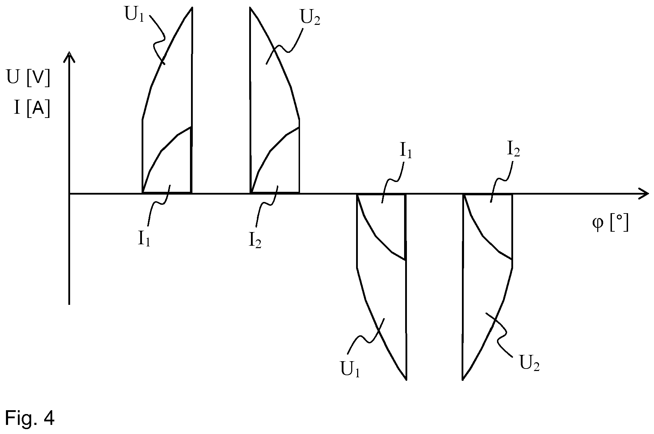

Figur 3 zeigt einen Verlauf der Spannungen U₁, U₂ für beide Wicklungsstränge 21, 22 des zweisträngigen Einphasen-Synchronmotors 2. Figur 4 zeigt einen Verlauf der Spannungen U₁, U₂ und hierdurch induzierten Ströme I₁, I₂ für beide Wicklungsstränge 21, 22 des zweisträngigen Einphasen-Synchronmotors 1. Die Abszissenachse entspricht jeweils dem Verlauf des Phasenwinkels φ. Die Ordinatenachse entspricht in der Figur 3 der Spannung U bzw. in der Figur 4 sowohl der Spannung U als auch dem Strom I.

In der Figur 3 ist der Verlauf der Netzspannung UN als durchgängige Linie über einen Phasenwinkel φ von 450° dargestellt. Mittels des ersten Schalters 31 wird während der ersten 90° des Phasenwinkels φ der ersten Wicklungsstrang 21 leitend geschaltet, so dass die Spannung U₁ des ersten Wicklungsstranges 21 der Netzspannung U_{N} entspricht. Dies führt zu der markierten Spannungs-Zeit-Fläche unterhalb des Verlaufs der Netzspannung U_{N}, die zu einem induzierten Strom in führt, wie er in der Figur 4 entsprechend dargestellt ist.

Innerhalb der ersten 90° des Phasenwinkels φ wird der erste Schalter 31 wieder nicht-leitend geschaltet, so dass sowohl die Spannung U₁ als auch der Strom I₁ des ersten Wicklungsstranges 21 enden.

Innerhalb der zweiten 90° des Phasenwinkels φ wird dann um die Phasenverschiebung Δφ von 90° versetzt der zweite Schalter 32 leitend geschaltet, so dass die Spannung U₂ des zweiten Wicklungsstranges 22 der Netzspannung U_{N} entspricht. Dies führt zu der markierten Spannungs-Zeit-Fläche unterhalb des Verlaufs der Netzspannung U_{N}, die zu einem induzierten Strom I₂ führt, wie er in der Figur 4 entsprechend dargestellt ist. Die Spannungs-Zeit-Flächen der beiden Spannungen U₁, U₂ sind dabei identisch.

Innerhalb der zweiten 90° des Phasenwinkels φ wird der zweite Schalter 32 wieder nicht-leitend geschaltet, so dass sowohl die Spannung U₂ als auch der Strom I₂ des zweiten Wicklungsstranges 22 enden. Auch dieses Ausschalten erfolgt um die Phasenverschiebung Δφ von 90° versetzt.

Danach wiederholen sich diese Ein-/Ausschaltvorgänge für beide Wicklungsstränge 31, 32 fortlaufend, so dass ein Betrieb des zweisträngigen Einphasen-Synchronmotors 2 mit der erfindungsgemäßen Steuerungselektronik 3 realisiert werden kann.

Dabei können die Zeitpunkte des Einschaltens und des Ausschaltens der beiden Wicklungsstränge 31, 32 über den jeweiligen Schalter 21, 22 variiert werden. Beispielsweise kann zum Anfahren des zweisträngigen Einphasen-Synchronmotors 2 der jeweilige 90° breite Phasenwinkel φ ausgeschöpft werden. Im Betrieb kann dann das Einschalten verzögert bzw. das Abschalten vorgezogen werden, um einen geringeren induzierten Strom I zu erzeugen. Auf diese Weise kann auch eine Anpassung der Last erfolgen.

### Bezugszeichenliste (Bestandteil der Beschreibung)

- I: (Wechsel-)Strom
- I₁: (Wechsel-)Strom erster Wicklungsstrang 21
- I₂: (Wechsel-)Strom zweiter Wicklungsstrang 22

- U: Wechselspannung
- U_{N}: (Wechsel-)Netzspannung
- U₁: Wechselspannung erster Wicklungsstrang 21
- U₂: Wechselspannung zweiter Wicklungsstrang 22

- φ: Phasenwinkel; Phasenlage
- Δφ: Phasenverschiebung

- 1: zweisträngiger Einphasen-Synchronantrieb

- 2: zweisträngiger Einphasen-Synchronmotor
- 20: Bezugspotential
- 21: erster Wicklungsstrang
- 22: zweiter Wicklungsstrang
- 23: Stator; Ständer
- 24: Rotor; Läufer

- 3: Steuerungselektronik
- 30: Steuerungseinheit; Mikrocontroller
- 31: erster Schalter
- 32: zweiter Schalter
- 33: Netzspannungsanschluss; Paar von Kontakten
- 34: Nulldurchgangserkennungseinheit
- 35: Gleichrichterschaltung
- 35a-35d: erste bis vierte Diode der Gleichrichterschaltung 35
- 36: Gleichspannungsschalter
- 36a: Gleichspannungs-Halbleiterschalter; MOSFET; IGBT
- 36b: Umschalter
- 37: Kondensator

## Patentansprüche

1. Zweisträngiger Einphasen-Synchronantrieb (1), mit
einem zweisträngigen Einphasen-Synchronmotor (2) mit einem ersten Wicklungsstrang (21) und mit einem zweiten Wicklungsstrang (22), und mit
einer Steuerungselektronik (3) mit einem ersten Schalter (31) zum Schalten des ersten Wicklungsstranges (21) und mit einem zweiten Schalter (32) zum Schalten des zweiten Wicklungsstranges (22),
wobei die Steuerungselektronik (3) ausgebildet ist, die beiden Schalter (31, 32) derart zeitlich bzw. im Phasenwinkel (φ) einer Wechselspannung (U) versetzt zueinander zu schalten, dass immer nur ein Wicklungsstrang (21, 22) gleichzeitig bestromt wird.

2. Zweisträngiger Einphasen-Synchronantrieb (1) gemäß Anspruch 1,
wobei die Steuerungselektronik (3) ausgebildet ist, die beiden Schalter (31, 32) mit einer Phasenverschiebung (Δφ) von 80° bis 100°, bevorzugt etwa 90°, verzögert zu schalten.

3. Zweisträngiger Einphasen-Synchronantrieb (1) gemäß Anspruch 1 oder 2,
wobei die Steuerungselektronik (3) ausgebildet ist, die beiden Schalter (31, 32) derart zu schalten, dass die Dauer eines leitenden Zustand des jeweiligen Schalters (31; 32) geringer als 5 ms bei einer Wechselspannung (U) von 50 Hz bzw. geringer als ein Phasenwinkel (φ) von 90° ist.

4. Zweisträngiger Einphasen-Synchronantrieb (1) gemäß einem der vorherigen Ansprüche,
wobei beide Wicklungsstränge (21, 22) die gleiche Windungszahl aufweisen.

5. Zweisträngiger Einphasen-Synchronantrieb (1) gemäß einem der vorherigen Ansprüche,
wobei der erste Schalter (31) und der zweite Schalter (32) mit dem jeweiligen Wicklungsstrang (21, 22) derart elektrisch leitfähig verbunden sind, so dass über dem ersten Schalter (31) bzw. über dem zweiten Schalter (32) eine Wechselspannung (U) anliegen kann,
wobei der erste Schalter (31) und der zweite Schalter (32) jeweils ausgebildet sind, die Schaltfunktion mittels eines Gleichspannungsschalters (36) auszuführen.

6. Zweisträngiger Einphasen-Synchronantrieb (1) gemäß Anspruch 5,
wobei der Gleichspannungsschalter (36) einen Gleichspannungs-Halbleiterschalter (36a), vorzugsweise einen MOSFET (36a) oder einen IGBT (36a), aufweist, welcher ausgebildet ist, im leitenden Zustand einen Gleichstrom zu leiten, abzuschalten und im nicht-leitenden Zustand einen Gleichstrom zu sperren,
wobei der Gleichspannungsschalter (36) ferner einen Umschalter (36b) aufweist, der ausgebildet ist, den Gleichspannungs-Halbleiterschalter (36a) zwischen seinem leitenden Zustand und seinem nicht-leitenden Zustand zu schalten.

7. Zweisträngiger Einphasen-Synchronantrieb (1) gemäß einem der Ansprüche 5 oder 6,
wobei der erste Schalter (31) und der zweite Schalter (32) jeweils eine Gleichrichterschaltung (35) aufweisen, welche ausgebildet ist, eine über der Gleichrichterschaltung (35) anliegende Wechselspannung (U) gleichzurichten,
wobei der Gleichspannungsschalter (36) innerhalb der Gleichrichterschaltung (35) angeordnet ist.

8. Zweisträngiger Einphasen-Synchronantrieb (1) gemäß Anspruch 7,
wobei die Gleichrichterschaltung (35) ein erstes Paar von Dioden (35a, 35b) aufweist, welche parallel zueinander angeordnet sind, und
wobei die Gleichrichterschaltung (35) ein zweites Paar von Dioden (35c, 35d) aufweist, welche parallel zueinander angeordnet sind,
wobei der Gleichspannungsschalter (36) parallel zu dem ersten Paar von Dioden (35a, 35b) und zu dem zweiten Paar von Dioden (35c, 35d) angeordnet ist.

9. Zweisträngiger Einphasen-Synchronantrieb (1) gemäß Anspruch 7 oder 8,
wobei der erste Schalter (31) und der zweite Schalter (32) jeweils einen Energiespeicher, bevorzugt einen Kondensator (37), aufweist, der parallel zum Gleichspannungsschalter (36) angeordnet ist.

10. Zweisträngiger Einphasen-Synchronantrieb (1) gemäß einem der vorherigen Ansprüche,
wobei die Steuerungselektronik (3) ferner eine Nulldurchgangserkennungseinheit (34) aufweist, welche ausgebildet ist, einen Nulldurchgang des Phasenwinkels (φ) der Wechselspannung (U) zu erkennen.

11. Zweisträngiger Einphasen-Synchronantrieb (1) gemäß einem der vorherigen Ansprüche, ferner mit
einem Netzspannungsanschluss (33) zum Abgriff einer Netzspannung (U_{N}).

12. Zweisträngiger Einphasen-Synchronmotor (2) zur Verwendung bei einem zweisträngigen Einphasen-Synchronantrieb (1) gemäß einem der Ansprüche 1 bis 11, mit
einem ersten Wicklungsstrang (21), und
einem zweiten Wicklungsstrang (22),
wobei beide Wicklungsstränge (21, 22) die gleiche Windungszahl aufweisen.

13. Steuerungselektronik (3) zur Verwendung bei einem zweisträngigen Einphasen-Synchronantrieb (1) gemäß einem der Ansprüche 1 bis 11, mit
einem ersten Schalter (31) zum Schalten des ersten Wicklungsstranges (21), und mit
einem zweiten Schalter (32) zum Schalten des zweiten Wicklungsstranges (22),
wobei die Steuerungselektronik (3) ausgebildet ist, die beiden Schalter (31, 32) derart zeitlich bzw. im Phasenwinkel (φ) einer Wechselspannung (U) versetzt zueinander zu schalten, dass immer nur ein Wicklungsstrang (21, 22) gleichzeitig bestromt wird.

14. Elektrisches Gerät, vorzugsweise elektrisches Haushaltsgerät, vorzugsweise Waschmaschine, Wäschetrockner, Lüfter, Herd, Gebläse oder Spülmaschine, mit
einem zweisträngigen Einphasen-Synchronantrieb (1) gemäß einem der Ansprüche 1 bis 11.
